# EUROPÄISCHE PATENTSCHRIFT

(11) **EP 0 983 132 B1**
(45) Veröffentlichungstag und Bekanntmachung des Hinweises auf die Patenterteilung: **05.12.2001**
(21) Anmeldenummer: 98921404.4
(22) Anmeldetag: 28.03.1998
(51) Int. Cl.: B26D 7/30, A23B 4/06, A23L 3/36

(54) **VERFAHREN ZUM PORTIONIEREN EINES QUADERFÖRMIGEN BLOCKES AUS TIEFGEFRORENEM LEBENSMITTEL IN VOLUMENGENAUE PORTIONEN**
METHOD FOR DIVIDING A CUBED BLOCK OF DEEP FROZEN FOOD INTO PORTIONS WITH A PRECISE VOLUME
PROCEDE POUR PREPORTIONNER EN PORTIONS D'UN VOLUME PRECIS UN BLOC PARALLELEPIPEDIQUE D'UN PRODUIT ALIMENTAIRE SURGELE

(30) Priorität: 22.05.1997 DE 19721336; 05.08.1997 DE 19733855
(43) Veröffentlichungstag der Anmeldung: 08.03.2000
(73) Patentinhaber: Nienstedt GmbH, 45721 Haltern (DE)
(72) Erfinder: ROSENBERGER, Jörg, D-45721 Haltern (DE)
(74) Vertreter: COHAUSZ HANNIG DAWIDOWICZ & PARTNER
(86) Internationale Anmeldenummer: EP9801836
(87) Internationale Veröffentlichungsnummer: WO9852725

(56) Entgegenhaltungen:
- EP-A- 0 455 134
- EP-A- 0 647 409
- DE-A- 3 217 159
- DE-C- 19 612 029
- US-A- 4 192 899
- US-A- 4 626 436

## Beschreibung

Die Erfindung bezieht sich auf ein Verfahren zum Portionieren eines quaderförmigen Blockes aus tiefgefrorenem Lebensmittel, insbesondere Fisch oder Fleisch, durch mehrstufiges Teilen in von Stufe zu Stufe kleinere, gleichformatige, insbesondere quaderförmige Einheiten mit geraden Schnittflächen, wobei abschließend die kleinste Einheit durch Preßumformen die gewünschte Endform erhält.

Ein Verfahren dieser Art ist bekannt (DE 43 34 107 C1). Um bei diesem Verfahren aber auch anderen bekannten Verfahren den beim mehrfachen Teilen anfallenden Anteil an zerspantem Gut möglichst klein zu halten, werden möglichst dünne Sägeblätter verwendet. Darüber hinaus kann das zerspante Gut aufgefangen und auf die kleineren Einheiten wieder aufgetragen werden. Allein diese Art der Minimierung des Schnittverlustes garantiert allerdings nicht in jedem Fall eine maximale Ausbeute an Portionen aus einem quaderförmigen Block. Das läßt sich an einem Beispiel aus der Praxis zeigen: Aus einem in seinem Format vorgegebenen Standardblock (l = 482 mm; b = 254 mm; h = 62,6 mm) lassen sich durch mehrstufiges Teilen in immer kleinere gleichformatige Einheiten Portionen mit einem bestimmten Mindestgewicht von 67 g und einer bestimmten Dimension (l = 126,7 mm; b = 70/25,32 mm; h = 12,06 mm) in der Regel nur unter Inkaufnahme eines gewissen Übergewichtes erreichen, wenn nicht ein nicht aufteilbarer Rest beim Portionieren übrigbleiben soll.

Aber nicht nur das Gewicht, sondern auch das Volumen der Portionen ist für die Weiterverarbeitung wesentlich. Soll nämlich die Portion durch Preßumformen abschließend die gewünschte Endform erhalten, dann darf die Portion kein zu großes Volumen haben, weil sie anderenfalls mit Qualitätsverlust überpreßt wird, aber auch kein zu kleines Volumen, weil anderenfalls die Portion nicht genügend ausgeformt werden kann.

Der Erfindung liegt somit die Aufgabe zugrunde, ein Verfahren zum Portionieren eines quaderförmigen Blockes zu schaffen, das einerseits eine optimale Ausbeute und andererseits möglichst volumengenaue Portionen liefert.

Diese Aufgabe wird bei einem Verfahren der eingangs genannten Art dadurch gelöst, daß die in der vorletzten Teilungsstufe erhaltenen kleineren Einheiten zu einem lückenlosen Strang aneinandergereiht werden, von dem in der letzten Teilungsstufe die kleinsten Einheiten abgetrennt werden.

Bei dem erfindungsgemäßen Verfahren können die Schnittebenen in der letzten Stufe ohne Rücksicht auf die Länge der in der vorletzten Teilungsstufe erhaltene Einheiten entsprechend dem gewünschten Gewicht und dem gewünschten Volumen in Portionen gelegt werden, weil der Rest der in die kleinsten Einheiten (Portionen) aufgeschnittenen Einheit, der in der Regel nicht dem Sollgewicht einer Portion entspricht, mit dem Anfangsabschnitt der in der Reihe nachfolgenden Einheit vereinigt wird, so daß im Ergebnis wieder eine gewichtsgenaue Portion erhalten wird.

Zur weiteren Erhöhung der Ausbeute sollte das Abtrennen in der letzten Stufe ein schnittverlustfreies Abscheren sein.

Für die hohe Ausbeute ist es von Vorteil, wenn die letzte Teilungsstufe eine verlustfreie Scherung ist. Nicht wesentlich ist, ob dabei die Portion zusammenhält oder etwas an den Schnittkanten bröckelt. Deshalb ist es auch nicht wesentlich, ob das Lebensmittel an der Trennfuge zwischen den einzelnen Platten zusammenhält oder nicht. Damit das gesamte Volumen für die anschließende Pressung zusammenbleibt, ist vorgesehen, daß es beim Schervorgang unmittelbar in eine Preßform gegeben wird.

Vorzugsweise wird von einem Block mit einem Längen-, Breiten- und Dickenverhältnis von l:b:h = 8:4:1 ausgegangen, der in der ersten Teilungsstufe in drei quaderförmige Riegel parallel zu den Schmalseiten geteilt wird, und daß in der zweiten Teilungsstufe die Riegel jeweils senkrecht bis geneigt zu den Schmalseiten in zwei im Querschnitt rechteck- bis dreieckförmige Platten geteilt werden, die für die letzte Teilungsstufe mit ihren kleinsten Stirnseiten aneinanderstoßend hintereinandergereiht werden. Die Standardabmessungen eines solchen Blockes sind l = 482 mm, b = 254 mm und h = 62,6 mm. Im Unterschied zu den bekannten Verfahren wird bei dem erfindungsgemäßen Verfahren eines solchen Blockes das Mehrfachteilen in neuen Schnittebenen durchgeführt. Mit in der Praxis bewährten Sägen, z.B. Bandsägen lassen sich minimale Schnittspalten von 0,6 mm erreichen. Beim Einsatz solcher Sägen erhält man aus dem Block mit den genannten Abmessungen in der ersten Teilungsstufe drei Riegel mit einer Breite von 160,26 mm. Diese Riegel werden dann noch einmal längsgeteilt, so daß Platten mit rechteckigem, trapezförmigem oder dreieckigem Querschnitt bestehen. Ihre maximale Dicke beträgt 31,05 mm. Werden nun diese Platten mit einer Länge von 254 mm in Reihe so aneinandergereiht, daß ein lückenloser Strang entsteht dann lassen sich von diesem Strang für Portionen mit einem Gewicht von 100 g-Scheiben mit einer Dicke von 20,61 mm abscheren. Da in der Regel nach dem letzten Schervorgang von einer Platte eine Scheibe mit einem Gewicht von weniger als 100 g übrigbleibt, wird von der nächsten spaltfrei anliegenden Platte eine Scheibe mit dem Differenzgewicht abgeschert, so daß auch im Übergangsbereich von der einen Platte zur nächsten anderen Platte eine gewichtsgenaue Portion erhalten wird. Bei sechs Platten haben dann 73 Portionen exakt das Gewicht von 100 g und nur die letzte Portion ein Gewicht von 94,4 g. Da in der Praxis der Strang unendlich lang durch gleichartiges Aufteilen weiterer Blöcke gemacht werden kann, gibt es am Ende des Herstellungsprozesses maximal eine Portion, die nicht exakt das geforderte Gewicht von 100 g hat. Das bedeutet, daß die Ausbeute an Portionen mit exakt dem Gewicht und Volumen wesentlich größer als bei herkömmlichen, auf jeweils eine Platte beschränkten Verfahren ist. Bei einer großen Anzahl von einen Strang bildenden Platten beträgt deshalb die Ausbeute von Platten mit einem Gewicht von exakt 100 g annähernd 100%.

Im folgenden wird die Erfindung anhand einer ein Ausführungsbeispiel darstellenden Zeichnung näher erläutert.

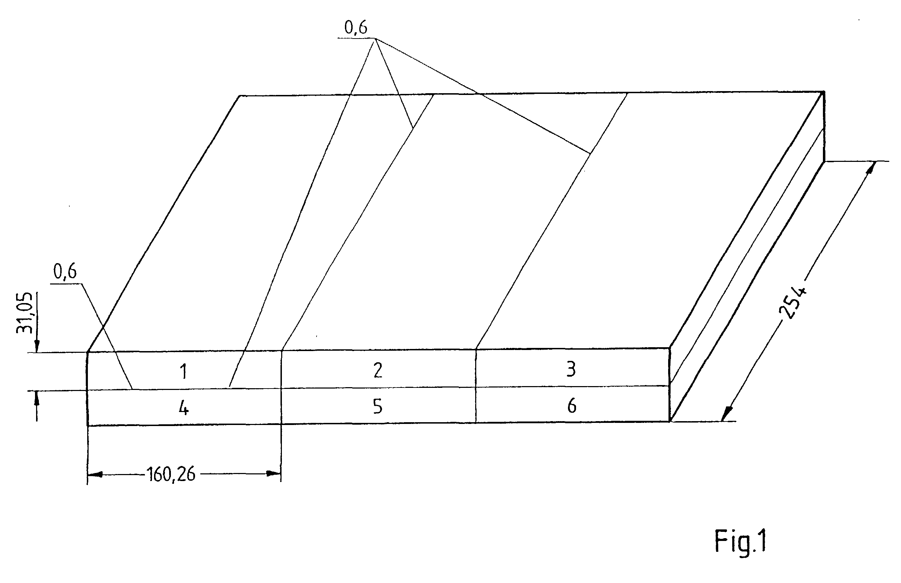

In der beiliegenden Zeichnung ist in Figur 1 ein Standardblock aus tiefgefrorenem Fisch mit den Abmessungen 482 mm x 254 mm x 62,7 mm-und einem Blockgewicht von 7,484 kg dargestellt. Es ist angedeutet, wo die einzelnen Schnittebenen zwischen den Platten 1 bis 6 verlaufen. Die Schnittebene zwischen den Platten 1 und 4, 2 und 5 und 3 und 6 kann, wie dargestellt, parallel zu den Breitseiten verlaufen, sie kann aber auch dazu schräg liegen, so daß im Extremfall 2 Platten entstehen, die im Querschnitt dreieckförmig sind. In der Praxis werden heute Bandsägen eingesetzt, die eine nur sehr dünne Schnittfuge von 0,6 mm hinterlassen. Entsprechend klein ist der Schnittverlust. Das dabei anfallende zerspante Gut kann, wie an sich bekannt, aufgefangen und wieder aufgetragen werden, wodurch der Schnittverlust weiter minimiert wird.

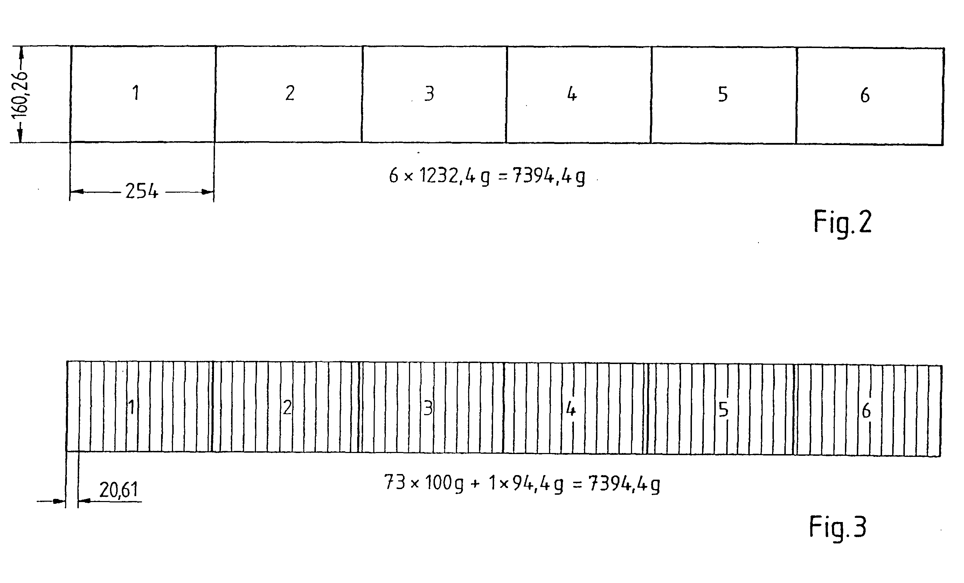

In Figur 2 ist ein Strang aus den Platten 1 bis 6 dargestellt, die lückenlos aneinandergereiht sind. Unter Berücksichtigung des in den beiden ersten Teilungsstufen nicht vollständig zu vermeidenden Schnittverlustes beträgt das Gewicht des Stranges 7,3944 kg.

In Figur 3 ist der Strang gemäß Figur 2 mit angedeuteten Scherebenen dargestellt. Es ist zu erkennen, daß bei einer Scheibendicke von 20,61 mm, die Scherebene nicht mit der Ebene zusammenfällt, an der die einzelnen Platten 1 bis 6 aneinanderstoßen. Die Ausbeute von 100 g-Portionen aus sechs Platten beträgt bei einer Dicke von 20,61 mm 73 Stück plus 1 Stück mit einem Gewicht von 94,4 g. Die Ausbeute an 100 g-Portionen beträgt danach fast 99 %. Es versteht sich, daß diese Ausbeute um so höher ist, je mehr Platten in einem Strang verarbeitet werden, weil sich dann die nicht gewichtsgenaue letzte Portion auf ein größeres Gesamtgewicht verteilt.

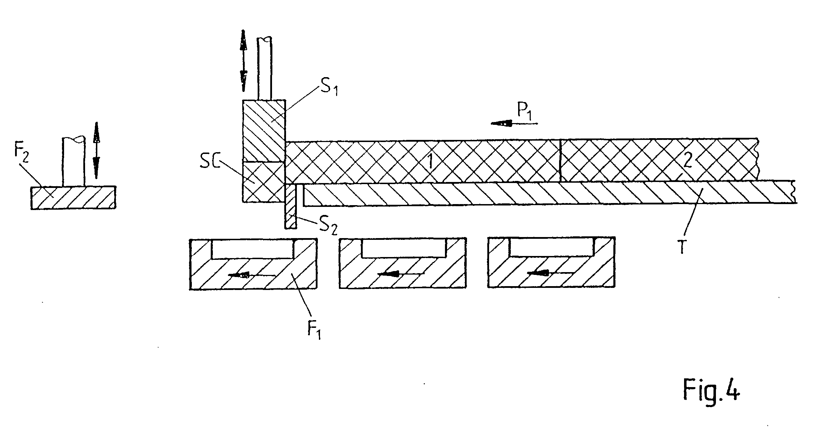

In Figur 4 ist in Seitenansicht dargestellt, wie die Übergabe der abgescherten kleinsten Portion in eine Preßform erfolgt. Dazu ist ein ortsfester Tisch T vorgesehen, über den die aneinandergereihten Platten 1, 2, 3, 4, 5, 6 in Richtung des Pfeils P1 zu einer Schere S1, S2 transportiert werden. Unter die Schere S1, S2 werden von muldenförmige Unterteile F1 einer Preßform transportiert. Wird nun von der Platte 1 eine Scheibe SC abgeschert, dann fällt diese in das muldenförmige Unterteil F1 der Preßform. Dieser Unterteil F1 wird nun mit der Scheibe SC unter den beweglichen Stempel F2 der Preßform vorbewegt, wo die Scheibe SC, durch Formpressen die gewünschte Endform erreicht. Da der muldenförmige Teil F1 sich beim Schervorgang unterhalb der Schere S1, S2 befindet, ist es unerheblich, ob bei diesem, das tiefgefrorene Lebensmittel mechanisch belastenden Schervorgang das Lebensmittel bröckelig wird. Die gesamte Portion wird aufgefangen und erhält anschließend beim Preßumformen wieder den gewünschten Zusammenhalt. Wichtiger als ein bleibender Zusammenhalt beim Schervorgang ist, daß es dabei nicht zu einem Schnittverlust kommt, der beim Abschneiden mittels Sägen oder dergleichen unvermeidlich wäre.

## Patentansprüche

1. Verfahren zum Portionieren eines quaderförmigen Blockes aus tiefgefrorenem Lebensmittel, insbesondere Fisch oder Fleisch, durch mehrmalig mehrstufiges Teilen in von Stufe zu Stufe kleinere gleichformatige, insbesondere quaderförmige Einheiten (1-6) mit geraden Schnittflächen, wobei abschließend die kleinste Einheit (56) durch Preßumformen die gewünschte Endform erhält, **dadurch gekennzeichnet, daß** die in der vorletzten Teilungsstufe erhaltenen kleineren Einheiten (1-6) zu einem lückenlosen Strang aneinandergereiht werden, von dem in der letzten Teilungsstufe die kleinsten Einheiten (56) abgetrennt werden.

2. Verfahren nach Anspruch 1, **dadurch gekennzeichnet,daß** das Abtrennen in der letzten Teilungsstufe ein schnittverlustfreies Abscheren ist.

3. Verfahren nach Anspruch 2, **dadurch gekennzeichnet**,**da**ß die abgescherten kleinsten Einheiten unmittelbar in eine Preßform (F1) übergeben werden.

4. Verfahren nach einem der Ansprüche 1 bis 3, **dadurch gekennzeichnet**, **da**ß von einem Block mit einem Längen-, Breiten- und Dickenverhältnis von l:b:h = 8:4:1 ausgegangen wird, der in der ersten Teilungsstufe in drei quaderförmige Riegel parallel zu den Schmalseiten geteilt wird, und daß in der zweiten Teilungsstufe die Riegel jeweils senkrecht bis geneigt zu ihren Schmalseiten in zwei im Querschnitt rechteck- bis dreieckförmige Platten geteilt werden, die für die letzte Teilungsstufe mit ihren kleinsten Stirnseiten aneinanderstoßend hintereinandergereiht werden.

## Claims

1. A method for dividing into portions a cubed block of deep frozen food, more particularly fish or meat, by the repeated multistage division of identically shaped, more particularly cubed units (1-6) which become smaller from stage to stage and have straight cutting faces, the smallest unit (56) then being given the required final shape by press forming, **characterised in that** the smaller units (1-6) obtained in the penultimate division step are arranged in a continual line, from which the smallest units (56) are separated in the final division step.

2. A method according to claim 1, **characterised in that** the separation in the final division stage is a shearing-off free from cutting loss.

3. A method according to claim 1, **characterised in that** the shorn-off smallest units are directly transferred to a press mould (F1).

4. A method according to one of claims 1 to 3, **characterised in that** a start is made from a block which has a length/width/thickness ratio of l:b:h = 8:4:1 and which in the first division stage is divided into three cubed bars, and in the second division stage each of the bars is divided perpendicularly to inclined in relation to its narrow sides into two slabs of rectangular to triangular cross-section which for the last division stage are arranged one after the other abutting one another via their smallest end faces.

## Revendications

1. Procédé pour découper un bloc parallélépipédique d'un produit alimentaire surgelé, en particulier poisson ou viande, en portions d'un volume précis, par division répétée en plusieurs étapes en unités (1-6) en particulier parallélépipédiques, à surfaces de coupe droites, plus petites d'étape en étape, la plus petite unité (SC) obtenant finalement la forme finale souhaitée par formage à la presse,
**caractérisé en ce que** les unités (1-6) plus petites obtenues à l'avant-dernière étape de division sont alignées les unes avec les autres en une file sans vides de laquelle les plus petites unités (SC) sont séparées à la dernière étape de division.

2. Procédé selon la revendication 1,
**caractérisé en ce que** la séparation à la dernière étape de division est un tranchage sans pertes de coupe.

3. Procédé selon la revendication 2,
**caractérisé en ce que** les plus petites unités tranchées sont immédiatement transférées dans un moule de pression (F1).

4. Procédé selon l'une des revendications 1 à 3,
**caractérisé en ce qu'**on part d'un bloc ayant des rapports longueur, largeur, épaisseur de l : b : h = 8 : 4 : 1, qui est divisé à la première étape de division en trois barres parallélépipédiques, parallèlement aux petites faces et que, à la deuxième étape, les barres sont divisées, respectivement perpendiculairement ou selon une inclinaison par rapport à leurs petites faces, en deux plaques rectangulaires ou triangulaires en section transversale qui sont alignées l'une avec l'autre avec leurs plus petites faces frontales en butée l'une contre l'autre pour la dernière étape de division.
